# EUROPEAN PATENT SPECIFICATION

(11) **EP 1 462 892 B1**
(45) Date of publication and mention of the grant of the patent: **01.08.2007**
(21) Application number: 04006544.3
(22) Date of filing: 18.03.2004
(51) Int. Cl.: G05B 19/042, G05B 23/02

(54) **Inspection data communications system and inspection data communicating method**
Datenkommunikationsinspektionssystem und Datenkommunikationsinspektionsverfahren
Système d'inspection de communication de données et procédé d'inspection de communication de données

(30) Priority: 28.03.2003 JP 2003092004
(43) Date of publication of application: 29.09.2004
(73) Proprietor: KABUSHIKI KAISHA TOYOTA JIDOSHOKKI, Kariya-shi, Aichi-ken 448-8671 (JP)
(72) Inventor: Iwashita, Tsunenori, Kariya-shi Aichi-ken 448-8671 (JP)
(74) Representative: HOFFMANN EITLE

(56) References cited:
- EP-A- 0 196 677
- EP-A- 0 302 364
- EP-A- 0 461 078
- EP-A- 0 810 555
- US-A- 4 918 613
- US-A- 5 394 334
- PATENT ABSTRACTS OF JAPAN vol. 0184, no. 15 (C-1233), 4 August 1994 (1994-08-04) & JP 6 123047 A (TOYOTA AUTOM LOOM WORKS LTD), 6 May 1994 (1994-05-06)

## Description

### Background of the Invention

### Field of the Invention

The present invention relates to an inspection data communications system and an inspection data communicating method for communicating data between a control device for controlling the operation of industrial equipment and a terminal device provided in an inspection site in which an abnormal condition of a product is detected.

### Description of the Related Art

Recently, with the remarkable technological progress of the Internet and WWW (Worldwide Web), industrial equipment such as a loom, etc. as disclosed by Japanese Patent Application Laid-open No.2003-5825 and Japanese Patent Application Laid-open No.2002-204281 is provided with a Web (WWW) server, a Web browser, etc. so that it can be connected as a network device to a network such as a LAN (local area network), etc.

A product generated by industrial equipment is checked for an abnormal condition at, for example, an inspection site, and if no abnormal condition is detected, it is shipped to the market.

Assume that, for example, an operator who makes an inspection on products has detected an abnormal condition in a product. When the operator has detected an abnormal condition in a product, he or she transmits the abnormal data indicating the detected abnormal condition to a server for centrally managing abnormal data from the terminal device provided in a fabric inspection site, etc. through a network. The server transmits the abnormal data to a control device for controlling the operation of predetermined industrial equipment. The control device and the operator refer to the received abnormal data, and perform predetermined control such as stopping the industrial equipment. Thus, the system which transmits abnormal data from the terminal device to the control device through the server is disclosed by, for example, Japanese Patent Application Laid-open No. 1994-272139. Especially, it is effective when a warp defect of a loom (a defect of fabric indicating an abnormal condition continuously occurring when the abnormal condition occurs on a part of warp in a preparatory step) is detected.

EP 0 461 078 A2 describes a loom diagnosis system comprising a network of loom control computers, communication control computers and an expert computer. The loom control computers and the expert computer are interconnected via communication control computers. The loom control computers receive information regarding the operation of a loom by sensors. The loom control computer judges the presence of a loom abnormality and transmits loom abnormality information to the expert computer. The expert computer receives the abnormality information and can specify the cause for abnormal operations.

EP 0 810 555 A2 describes monitoring of a system including determining the values of a selected number of parameters of the equipment and deciding at the location of the equipment if the values of the selected parameters are abnormal. If one of the values is found abnormal, data is transmitted to a central control station. The corresponding apparatus for monitoring the equipment includes a value determining means, an abnormality deciding means and a transmitting means for transmitting the data to a central control station if abnormality was detected.

US 5,394,334 discloses a multistation textile machine and process for preparing for operation of the textile machine including production stations, each having at least one control device, control computers, each being assigned to a production station and connected to the control device and a data bus connected to the control computers and a CPU including a transmitter.

EP 0 302 364 A2 discloses a controlling and supervising system for a loom including a network composed of a plurality of computer units useful for applications such as the automatic operation of a loom. A host computer is provided having data files for production control, which include dispatch data and provide production instructions to various units and devices within the network.

### Summary of the Invention

However, as described above, to transmit abnormal data to predetermined industrial equipment through a server, it is necessary to constantly operate a server, and there occurs the problem that the constant operation of the server is costly for maintenance, etc. Additionally, when the above-mentioned system is established, a reliable and expensive server is required, thereby increasing the introductory cost.

Therefore, the present invention aims at providing an inexpensive inspection data communications system and inspection data communicating method.

According to the present invention, this is achieved by an inspection data communication system with the features of independent claim 1 as well as by an inspection data communicating method with the features of independent claim 3.

A inspection data communications system communicates predetermined data relating to the inspection through a network between a control device for controlling the operation of industrial equipment and a terminal device provided in an inspection site in which an inspection is made as to whether or not there is an abnormal condition in a product generated by the industrial equipment. In the system, the terminal device includes a first transmission unit for transmitting abnormal data indicating the information about an abnormal condition of the product to the control device, and the control device includes a first reception unit for receiving the abnormal data and a first display unit for displaying the abnormal data received by the first reception unit.

Thus, since abnormal data can be transmitted without a server from the terminal device to the control device, an inexpensive inspection data communications system can be established.

Furthermore, abnormal data of the above-mentioned inspection data communications system includes control data indicating the type of the operation control of the industrial equipment, and the control device can also be designed to control the operation of the industrial equipment according to the control data.

Additionally, the inspection data communications system can also be designed such that the control device can control the operation of the loom, and the abnormal data shows the information about an abnormal condition of fabric woven by the loom.

The above-mentioned inspection data communications system can also be designed such that the control device includes a second transmission unit for transmitting to the terminal device the resultant data indicating the result of controlling the operation of the industrial equipment, and the terminal device includes a second reception unit for receiving the resultant data, and a second display unit for displaying the resultant data received by the second reception unit.

The scope of the present invention also includes the inspection data communicating method for communicating predetermined data of the inspection through a network between the control device for controlling the operation of industrial equipment and the terminal device provided in an inspection site in which an abnormal condition is detected if any in a product generated by the industrial equipment.

### Brief Description of the Drawings

FIG. 1 shows the configuration of the inspection data communications system according to an embodiment of the present invention;
FIG. 2 shows the configuration of a control device and a terminal device;
FIG. 3 is a flowchart for explanation of the operation of the terminal device;
FIG. 4 shows an example of a screen displayed on a Web browser;
FIG. 5 is a flowchart for explanation of the operation of the control device;
FIG. 6 shows the sequence for explanation of the operations between the control device and the terminal device;
FIGS. 7A and 7B show examples of the screens displayed on the Web browser and the display device; and
FIG. 8 shows the configuration of the inspection data communications system according to another embodiment of the present invention.

### Description of the Preferred Embodiments

The embodiments of the present invention are described below by referring to the attached drawings.

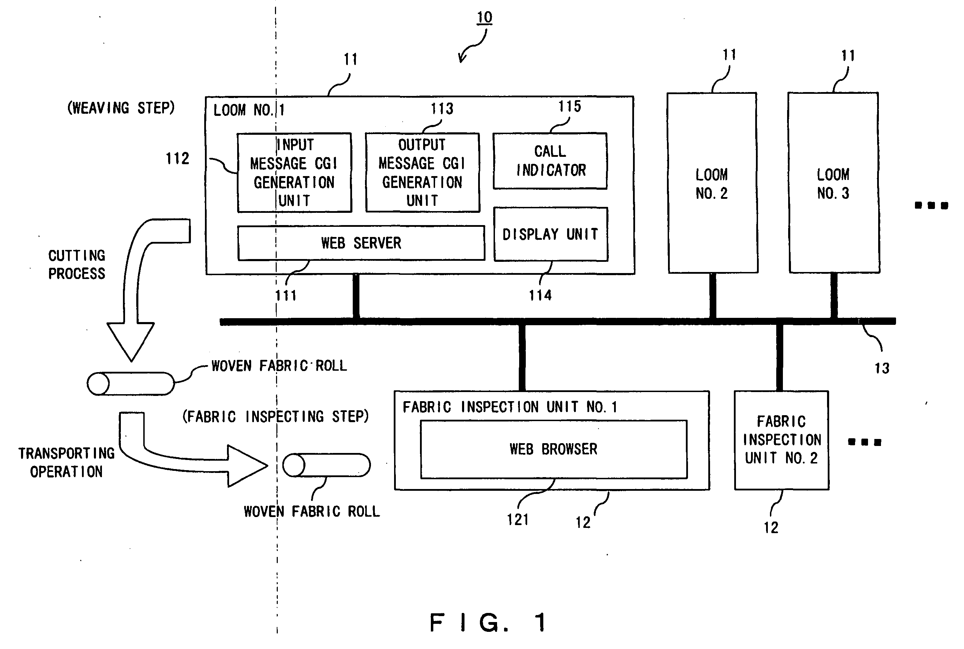

FIG. 1 shows the configuration of the inspection data communications system according to an embodiment of the present invention.

As shown in FIG. 1, an inspection data communications system 10 comprises a control device 11 (loom No. 1, loom No. 2, loom No. 3, ...) for controlling the operations of a plurality of looms, a plurality of terminal devices 12 (fabric inspection unit No. 1, fabric inspection unit No. 2, ...) provided in a fabric inspection site, etc., and a network 13 such as a LAN (local area network), etc. The control device 11 and the terminal device 12 communicate predetermined data through the network 13.

The above-mentioned control device 11 comprises a Web server 111 for communicating predetermined data with a Web browser connected to the network 13, an input message CGI (common gateway interface) generation unit 112 for generating an input screen (Web contents) to be displayed on the Web browser connected to the network 13, an output message CGI generation unit 113 for generating an output screen (Web contents) to be displayed on the Web browser, etc. connected to the network 13, a display unit 114 for displaying an output screen generated by the output message CGI generation unit 113, and a call indicator 115 operating based on the control data received by the Web server 111.

The terminal device 12 comprises a Web browser 121 for displaying an input screen generated by the input message CGI generation unit 112 of the control device 11 or an output screen generated by the output message CGI generation unit 113.

Furthermore, in the inspection data communications system 10, an operator performs a fabric inspecting operation in which it is checked whether or not there is an abnormal condition (fabric defect) such as a warp defect (refer to the description above), a weft defect (for example, broken weft), uneven weaving (for example, uneven intervals of weft of the fabric by a fluctuation in weft density), etc. in the process of cutting fabric woven by a loom and rolled into a woven fabric roll of a predetermined length and the subsequent processes.

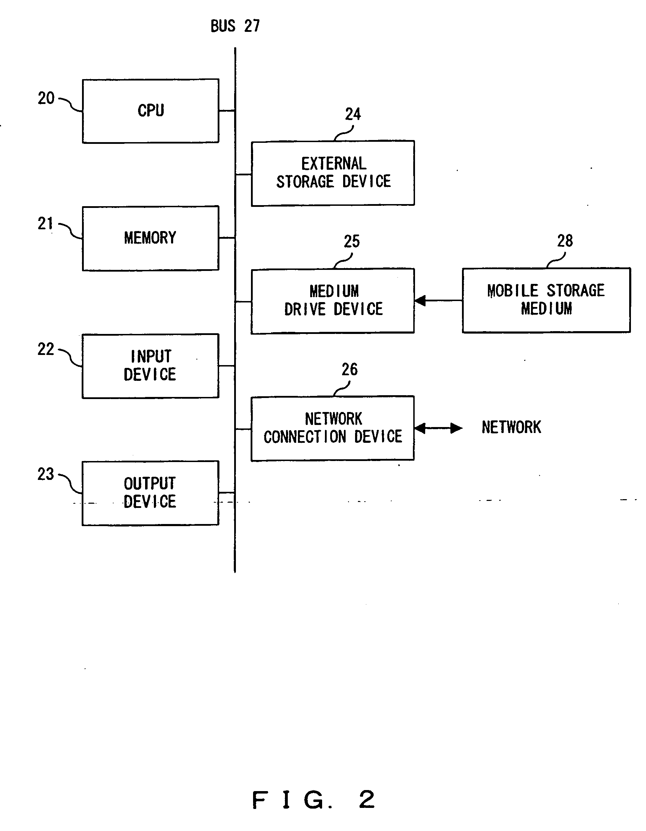

FIG. 2 shows an example the configuration of the control device 11 or the terminal device 12.

As shown in FIG. 2, the control device 11 or the terminal device 12 comprises a CPU (central processing unit) 20, memory 21, an input device 22, an output device 23 (first and second display units), an external storage device 24, a medium drive device 25, and a network connection device 26 (first and second transmission units, and first and second reception units), and they are interconnected through a bus 27.

The memory 21 includes, for example, ROM (read only memory), RAM (random access memory), flash memory, SRAM (static random access memory), DRAM (dynamic random access memory), etc., and stores a program used in the processes, Web contents, abnormal data described later, control data, etc. The CPU 20 performs necessary processes by executing a program using the memory 21.

The Web server facility of the Web server 111 and the Web browser facility of the Web browser 121, etc. correspond to the software components described in a program, and are respectively stored in the specific program code segments in the memory 21.

The input device 22 includes, for example, a keyboard, a mouse, etc., and is used in inputting an instruction and information from an operator.

The output device 23 includes, for example, a display, etc., configures the display unit 114 and the call indicator 115 for the control device 11, and configures, the Web browser 121 for the terminal device 12. By combining the input device 22 with the output device 23, for example, a touch panel, etc. can be generated.

The external storage device 24 includes, for example, a magnetic disk device, an optical disk device, a magneto-optical disk device, etc. An operator stores abnormal data described later and control data in the external storage device 24 so that they can be loaded into the memory 21 and used as necessary.

The medium drive device 25 drives a mobile storage medium 28, and accesses the stored contents. The mobile storage medium 28 can be a computer-readable storage medium such as a memory card, a flexible disk, CD-ROM (compact disk read only memory), an optical disk device, a magneto-optical disk, etc. An operator stores the abnormal data described later and control data in the mobile storage medium 28 so that they can be loaded into the memory 21 and used as necessary.

The network connection device 26 is controlled by a network interface, connected to an arbitrary network 13 such as a LAN, etc., and converts data for communications.

A program, etc. stored in the mobile storage medium 28, etc. is loaded into the memory 21. The CPU 20 executes the program using the data, and performs necessary processes.

Since the input screen and output screen, etc. described later can be realized using an existing program and software technology, the contents of the process of displaying them are not specifically described here.

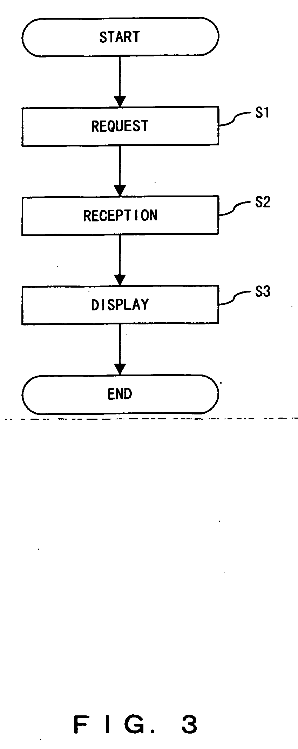

FIG. 3 is a flowchart for explanation of the operation of the terminal device 12.

First, in step S1, the terminal device 12 transmits request data to the control device 11 corresponding to the woven fabric data (for example, the name, the model name, and the beam name of the loom used in the cutting process, the date and time in which the cutting process is performed, the serial number (identification data), etc.) added to the woven fabric roll to be checked. This request data transmits the roll data (data indicating the length of the woven fabric when the loom is shut down, and data indicating the cause of the shutdown of the loom) to the terminal device 12. The predetermined data added to the woven fabric roll can be written directly to the woven fabric roll using a felt-tip pen, indicated on the tag attached to the woven fabric roll, or indicated by an IC chip or a bar code.

Then, in step S2, the terminal device 12 receives roll data based on the request data through the network 13.

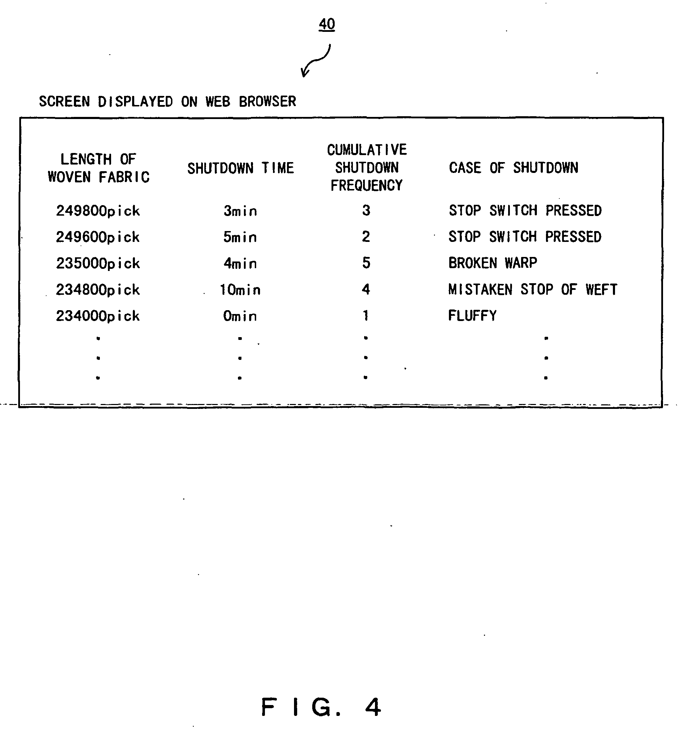

In step S3, the terminal device 12 displays the received roll data on the Web browser 121. FIG. 4 shows an example of a screen displayed on the Web browser 121. As shown in FIG. 4, a screen 40 shows the data (the number of picks, the value of meter or yard, etc.) indicating the length of the woven fabric when the loom stops, the period (minute) of the stop, the cumulative shutdown frequency for the cause of each stop, and the cause of a stop. The data displayed on the screen 40 can also display the data indicating the length of the woven fabric when an operator detects an abnormal condition of the woven fabric and the notification of the abnormal condition is input, or the data indicating the time required to remove the abnormal condition on the woven fabric. Furthermore, to display the screen shown in FIG. 4 on the Web browser 121, for example, the target screen 40 is displayed by specifying the IP address, or a link page (home page) is generated in advance, the link page is first displayed, and control can jump to the target screen 40.

Then, the operator can centrally check the fabric at a point in which there is a higher possibility of an occurrence of an abnormal condition of a fabric by performing the fabric checking process while referring to the roll data on the screen 40 displayed on the Web browser 121. Therefore, the work efficiency of the fabric inspecting operation can be improved.

Thus, by providing the Web server 111 for the control device 11 and the Web browser 121 for the terminal device 12, the operator can refer to desired roll data without a server, thereby successfully reducing the cost required in the constant operation of the server with the efficiency of the fabric inspecting operation maintained.

Described below is the method of generating roll data recorded in the control device 11.

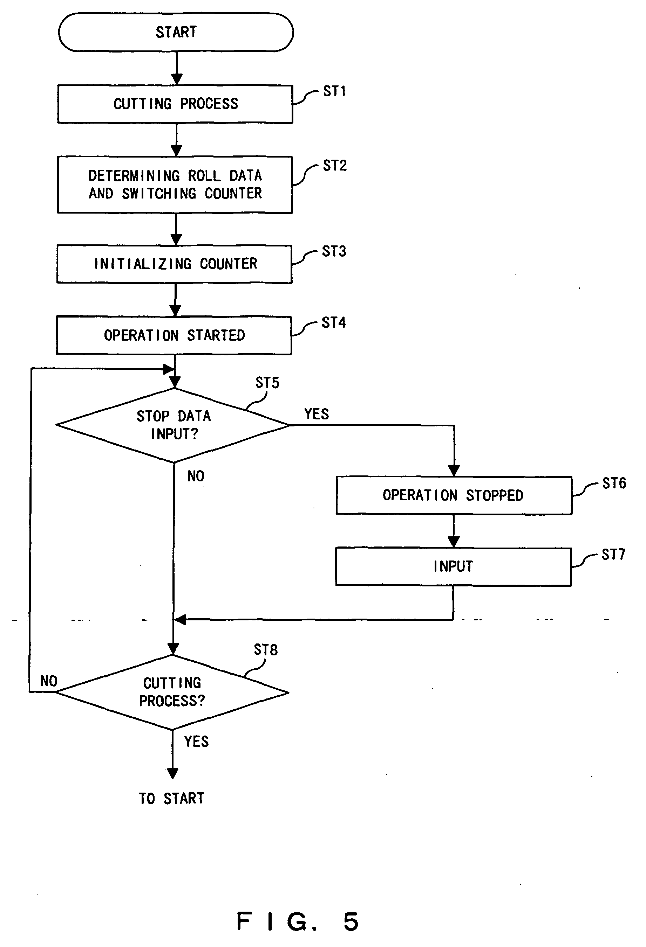

FIG. 5 is a flowchart for explanation of the operation of the control device 11.

As shown in FIG. 5, in step ST1, the operator inputs to the control device 11 through the input device 22 a request to "perform the cutting process", the "length of woven fabric immediately before the cutting process", etc.

Then, in step ST2, the control device 11 determines the roll data from the start to the stop of the operation of the loom, and prepares a predetermined counter for generation of roll data.

Then, in step ST3, the control device 11 initializes the prepared predetermined counter.

In step ST4, the control device 11 starts the operation of the loom, and starts the counter.

Then, in step ST5, the control device 11 determines whether or not the request to "stop the operation of the loom due to an abnormal condition" has been input by the operator.

If it is determined that the request data has been input (YES in step ST5), then the control device 11 stops the operation of the loom in step ST6.

Then, in step ST7, the control device 11 records the roll data input by the operator in a predetermined storage unit such as the input device 22 with the data associated with a predetermined value counted by the counter.

Then, in step ST8, the control device 11 determines whether or not the fabric to be woven has reached a predetermined length (for example, the "length of the woven fabric immediately before the cutting process" input in step ST2). When it is determined that the request data has not been input (NO in step ST5), control is passed to step ST8.

When it is determined that the woven fabric has not reached a predetermined length (NO in step ST8), then control is returned to step ST5, and it is determined whether or not the request data to "stop the operation of the loom due to an abnormal condition" has been input.

If it is determined that the woven fabric has reached a predetermined length (YES in step ST8), then control is returned to the starting point.

Described below is the operation of the control device 11 and the terminal device 12 when an abnormal condition is detected on a woven fabric roll during the fabric inspecting step, and the abnormal data indicating the abnormal condition is transmitted from the terminal device 12 to the control device 11.

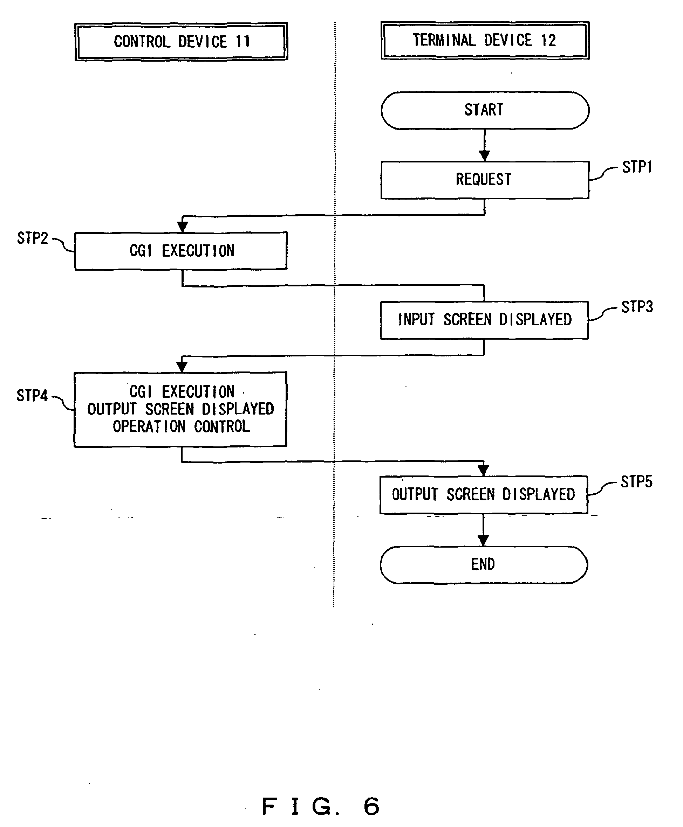

FIG. 6 shows the sequence of the explanation of the operations between the control device 11 and the terminal device 12.

As shown in FIG. 6, in step STP1, the terminal device 12 transmits to the control device 11 the request data to transmit an input screen for input of a message about the abnormal condition of woven fabric.

Then, in step STP2, upon receipt of the request data, the control device 11 generates a predetermined input screen by the input message CGI generation unit 112, and transmits it to the terminal device 12.

Then, in step STP3, the terminal device 12 displays the received input screen on the Web browser 121. Then, the operator inputs a message, etc. to the input screen displayed on the Web browser 121.

FIG. 7A shows an example of the input screen displayed on the Web browser 121. As shown in FIG. 7A, an input screen 70 comprises an input column 71 in which an arbitrary message can be input, a selection frame 72 in which the type of operation control of the loom can be selected by pressing and clicking a predetermined frame, and a transmission button 73 for transmission of the abnormal data indicating the message input to the input column 71 and the control data indicating the type of operation control selected in the selection frame 72 to the control device 11.

In the example shown in FIG. 7A, the message "warp defect has occurred." is input to the input column 71, and the selection frame 72 of "remote stop" and "call indicator blink". When the terminal device 12 checks that the transmission button 73 has been pressed, it transmits abnormal data and control data to the control device 11.

Then, in step STP4, the control device 11 controls the operation of the loom based on the received abnormal data and control data, and the output message CGI generation unit 113 generates a predetermined output screen based on the resultant data indicating the result of controlling the operation of the loom, and displays the output screen on the display unit 114. When the control of blinking the call indicator 115 is performed based on the control data, and when the control device 11 detects that the call indicator 115 blinks, the resultant data is generated.

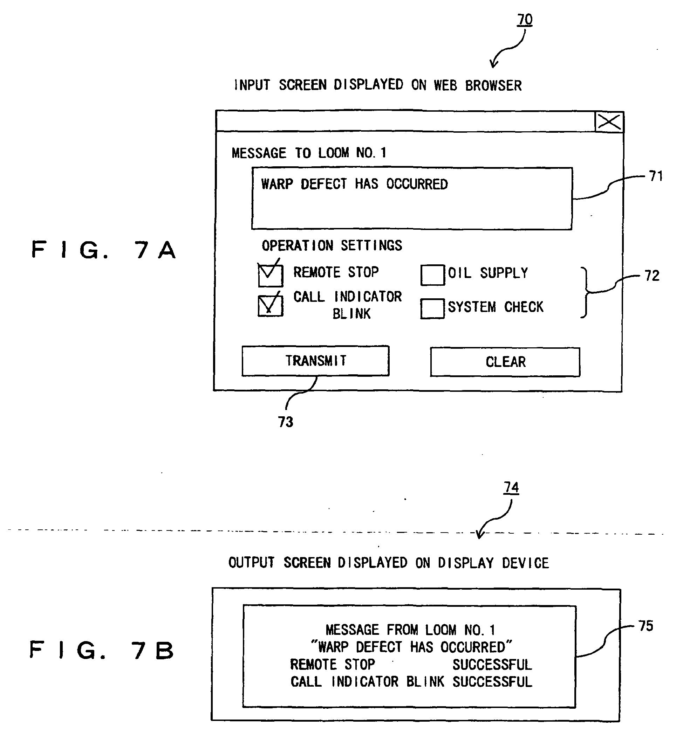

FIG. 7B shows an example of an output screen displayed on the display unit 114. As shown in FIG. 7B, an output screen 74 includes a display column 75 displaying the name of the message destination terminal device 12, the message input in the input column 71, and whether or not the operation control of the loom has been successfully performed. In the example shown in FIG. 7B, the display column 75 shows "message from loom No. 1, "warp defect has occurred", remote stop successful, call indicator blink successful".

In step STP5, the terminal device 12 receives the data on the output screen 74 transmitted from the control device 11, and displays the output screen 74 on the Web browser 121.

Thus, by providing the Web server 111 for the control device 11 and the Web browser 121 for the terminal device 12, the message input to the input column 71 can be displayed on the display unit 114 of the control device 11 without a server. Therefore, the introductory cost required when the inspection data communications system 10 is implemented and the operating cost required when the inspection data communications system 10 is operated can be lower than the existing inspection data communications system requiring a server.

Furthermore, since no server is required, various systems ranging from a small inspection data communications system 10 in which only several control devices 11 are connected to the network 13 to a large inspection data communications system 10 in which hundreds or thousands of control devices 11 are connected to the network 13 can be easily designed.

Additionally, since no server is required, the reduction of the work efficiency in the fabric inspecting step which can occur by the shutdown of a server can be suppressed.

### <Other Embodiments>

The present invention is not limited to the above-mentioned embodiments, but can be applied to various other configurations in the scope of the claims of the present invention. For example, the configuration can be changed as follows.

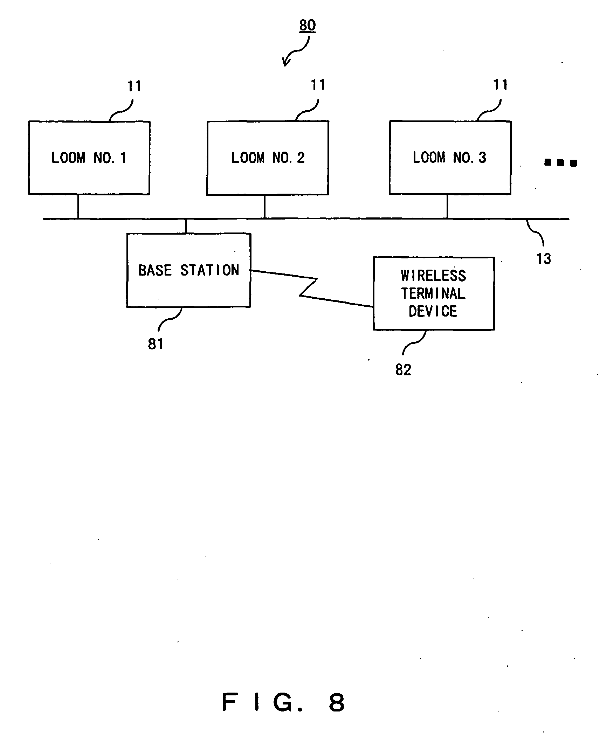

(1) FIG. 8 shows the configuration of the inspection data communications system according to another embodiment of the present invention. The components similar to those shown in FIG. 1 are assigned the same reference numerals and the explanation is omitted here.
   As shown in FIG. 8, an inspection data communications system 80 comprises a base station 81 loaded with a wireless LAN facility connected to the network 13, and a wireless terminal device 82 for communicating predetermined data (for example, the above-mentioned request data, roll data, etc.) with the control device 11 through the base station 81. The wireless terminal device 82 can be a personal computer with a wireless LAN facility and a PDA (personal digital assistant), etc., and can be provided with the Web browser 121 as with the terminal device 12 shown in FIG. 1.
(2) In step ST6 shown in FIG. 5 according to the above-mentioned embodiment, when the control device 11 determines that request data has been input, it stops the operation of the loom, and records the roll data in the counter. However, the roll data can be recorded in the counter without stopping the operation of the loom eventhough request data is input. That is, control is passed from step ST5 to step ST7 by omitting the step ST6.
(3) The control device 11 of the inspection data communications system 10 according to the above-mentioned embodiment can not only control the operation of a loom, but also control the operations of various types of industrial equipment. That is, the control device 11 can be applied to any type of industrial equipment as long as it comprises at least the Web server 111, the input message CGI generation unit 112, the output message CGI generation unit 113, and the display unit 114.
(4) In step ST7 shown in FIG. 5 according to the above-mentioned embodiment, the roll data input by the operator is recorded in a predetermined storage unit, but the roll data can be obtained by a sensor capable of detecting an abnormal condition of woven fabric, and can be recorded in a predetermined storage unit.

As described above, according to the present invention, abnormal data can be transmitted from the terminal device 12 to the control device 11 without using a server. Therefore, an inexpensive inspection data communications system can be realized.

## Claims

1. An inspection data communication system in which a plurality of control devices (11) and at least one terminal device (12) exchange pre-determined types of data via a network (13), **characterized in that**:
each of the control devices (11) controls operation of a loom and is equipped with a data transmission unit (26) for transmitting, when the loom stops operation, inspection data that indicates the length of fabric the loom has woven by this stoppage to the terminal device (12) via the network (13);
the at-least-one terminal device (12) is located within an inspection area where the fabric having been woven by the loom is inspected for any defect and is equipped with a receiver unit (26) receiving the inspection data transmitted from the control devices (11) via the network (13) and a display unit (121) for displaying the inspection data received by the receiver unit (26).

2. The inspection data communication system according to claim 1, wherein the inspection data further indicates duration of an operation stoppage of the loom, a cause of the operation stoppage of the loom, or cause-specific cumulative numbers of stoppages the loom has experienced.

3. An inspection data communication method in which a plurality of control devices (11) and at least one terminal device (12) exchange pre-determined types of data via a network (13), **characterized in that** the method includes steps of:
transmitting from a data transmission unit (26), which is provided within each of the control devices (11) that control operations of looms, when the loom stops operation, inspection data that indicates the length of fabric the loom has woven by this stoppage to the terminal device (12) via the network (13);
receiving by a receiver unit (26), which is provided within the at-least-one terminal device (12) located within an inspection area where the fabric having been woven by the loom is inspected for any defect, the inspection data transmitted from the control devices (11) via the network (13); and
displaying on a display unit (121), which is provided within the at-least-one terminal device (12) the inspection data received by the receiver unit (26).

4. The inspection data communication method according to claim 3, wherein the inspection data further indicates duration of an operation stoppage of the loom, a cause of the operation stoppage of the loom, or cause-specific cumulative numbers of stoppages the loom has experienced.

## Patentansprüche

1. Ein Inspektionsdatenkommunikationssystem, in dem eine Mehrzahl von Steuergeräten (11) und mindestens ein Endgerät (12) vorbestimmte Typen von Daten über ein Netzwerk (13) austauschen, **dadurch gekennzeichnet, dass**:
jedes der Steuergeräte (11) einen Betrieb eines Webstuhls steuert und ausgestattet ist mit einer Datenübertragungseinheit (26) zum Übertragen, wenn der Webstuhl den Betrieb anhält, von Inspektionsdaten, die die Länge eines Gewebes, das von dem Webstuhl gewoben wurde bei diesem Anhalten, dem Endgerät (12) über das Netzwerk (13) anzeigen;
das mindestens eine Endgerät (12) sich innerhalb eines Inspektionsbereichs befindet, wo das von dem Webstuhl gewobene Gewebe auf irgendeinen Defekt überprüft wird, und ausgestattet ist mit einer Empfangseinheit (26), die die Inspektionsdaten empfängt, die von den Steuergeräten (11) über das Netzwerk (13) empfangen werden, und eine Anzeigeeinheit (121) enthalten ist zum Anzeigen der Inspektionsdaten, die von der Empfangseinheit (26) empfangen werden.

2. Das Inspektionsdatenkommunikationssystem nach Anspruch 1, wobei die Inspektionsdaten ferner eine Dauer eines Betriebsstopps des Webstuhls, einen Anlass des Betriebsstopps des Webstuhls oder anlass-spezifische kumulative Anzahlen der Stopps anzeigen, die am Webstuhl vorkamen.

3. Ein Inspektionsdatenkommunikationsverfahren, in dem eine Mehrzahl von Steuergeräten (11) und mindestens ein Endgerät (12) vorbestimmte Typen von Daten über ein Netzwerk (13) austauschen, **dadurch gekennzeichnet, dass** das Verfahren die Schritte enthält:
Übertragen von einer Datenübertragungseinheit (26), die bereitgestellt wird innerhalb jedes der Steuergeräte (11), die Betriebe von Webstühlen steuern, wenn der Webstuhl den Betrieb anhält, von Inspektionsdaten, die die Länge von Gewebe, das der Webstuhl beim Anhalten gewoben hat, anzeigen bei dem Endgerät (12) über das Netzwerk (13);
Empfangen durch eine Empfangseinheit (26), die bereitgestellt wird innerhalb dem mindestens einen Endgerät (12), das sich innerhalb eines Inspektionsbereichs befindet, wo das Gewebe, das gewoben wurde durch den Webstuhl, auf irgendeinen Defekt überprüft wird, von Inspektionsdaten, die von den Steuergeräten (11) über das Netzwerk (13) übertragen werden; und
Anzeigen auf einer Anzeigeeinheit (121), die bereitgestellt wird innerhalb des mindestens einen Endgeräts (12), der Inspektionsdaten, die durch die Empfangseinheit (26) empfangen werden.

4. Das Inspektionsdatenkommunikationsverfahren nach Anspruch 3, wobei die Inspektionsdaten ferner die Dauer eines Betriebsstopps des Webstuhls, einen Anlass des Betriebsstopps des Webstuhls oder anlass-spezifische kumulative Anzahlen der Stopps, die der Webstuhl erfahren hat, anzeigen.

## Revendications

1. Système de communication de données de visitage, dans lequel plusieurs dispositifs de commande (11) et au moins un dispositif terminal (12) s'échangent des types prédéterminés de données via un réseau (13), **caractérisé en ce que** :
chacun des dispositifs de commande (11) commande le fonctionnement d'un métier à tisser et est équipé d'une unité de transmission de données (26) pour transmettre, lorsque le fonctionnement du métier. à tisser s'arrête, des données de visitage qui renseignent sur la longueur de l'étoffe tissée par le métier à tisser au moment de cet arrêt au dispositif terminal (12) via le réseau (13) ;
ledit au moins un dispositif terminal (12) est disposé dans une zone de visitage dans laquelle l'étoffe qui a été tissée par le métier à tisser fait l'objet d'un visitage pour détecter un quelconque défaut, et est équipé d'une unité de réception (26) qui reçoit les données d'inspection transmises par les dispositifs de commande (11) via le réseau (13) et une unité d'affichage (121) pour afficher les données de visitage reçues par l'unité de réception (26).

2. Système de communication de données de visitage, selon la revendication 1, dans lequel les données de visitage renseignent en outre sur la durée d'un arrêt de fonctionnement du métier à tisser, sur une cause de l'arrêt de fonctionnement du métier à tisser ou sur le nombre d'arrêts cumulés spécifiques à une cause qu'a subis le métier à tisser.

3. Procédé de communication de données de visitage, dans lequel plusieurs dispositifs de commande (11) et au moins un dispositif terminal (12) s'échangent des types prédéterminés de données via un réseau (13), **caractérisé en ce que** le procédé englobe les étapes consistant à :
transmettre, à partir d'une unité de transmission de données (26), qui est prévue au sein de chacun des dispositifs de commande (11) qui commandent le fonctionnement du métier à tisser, lorsque le fonctionnement du métier à tisser s'arrête, des données de visitage qui renseignent sur la longueur de l'étoffe tissée par le métier à tisser au moment de cet arrêt au dispositif terminal (12) via le réseau (13) ;
recevoir, via une unité de réception 26, qui est prévue au sein dudit au moins un dispositif terminal (12) disposé dans une zone de visitage dans laquelle l'étoffe qui a été tissée par le métier à tisser fait l'objet d'un visitage pour détecter un quelconque défaut, les données de visitage transmises par les dispositifs de commande (11) via le réseau (13) ; et
afficher, sur une unité d'affichage (121), qui est prévue au sein dudit au moins un dispositif terminal (12), les données de visitage reçues par l'unité de réception (26).

4. Procédé de communication de données de visitage, selon la revendication 3, dans lequel les données de visitage renseignent en outre sur la durée d'un arrêt de fonctionnement du métier à tisser, sur une cause de l'arrêt de fonctionnement du métier à tisser ou sur le nombre d'arrêts cumulés spécifiques à une cause qu'a subis le métier à tisser.
